# EUROPEAN PATENT APPLICATION

(11) **EP 3 489 543 A1**
(43) Date of publication of application: **29.05.2019**
(21) Application number: 17203870.5
(22) Date of filing: 27.11.2017
(51) Int. Cl.: F16F 15/16, B61F 5/30

(54) **TORSIONAL VIBRATION HYDRAULIC DAMPER FOR RAIL VEHICLE WHEEL SET**

(71) Applicant: Golonka, Adrian Tomasz, 54-622 Wroclaw (PL)
(72) Inventor: Golonka, Adrian Tomasz, 54-622 Wroclaw (PL)
(74) Representative: Kondrat, Mariusz

(57) **Abstract**

The object of the invention is hydraulic damper of the wheel set torsional vibration applicable in rail vehicles, especially in passenger rail vehicles or traction units. The torsional vibration hydraulic damper according to the invention is characterized in that comprising the rotary hydraulic displacement devices (3,4) with changeable direction of operation, moreover, each of the rotary hydraulic displacement devices comprising the rotor (5) mounted to the wheel set (5) and housing (6), moreover, housing is mounted to rail vehicle, especially to the axle-box (7) body or bogie frame or rail vehicle framework (8) and characterized in that the rotary hydraulic displacement devices are connected together using hydraulic conduits and filled up using hydraulic medium. The invention concerns also the method of damping the wheel set torsional vibration using the torsional vibration hydraulic damper.

## Description

The present invention relates to a torsional vibration hydraulic damper for rail vehicle wheel set, to be applied in rail vehicles, in particular, in passenger rail vehicles or traction units.

It is generally known fact, that in some situations which occur while the rail vehicles are running such as: sudden change of wheels adhesion, non-uniform load of the wheels by braking forces and different load conditions in points of contact of wheels and rails while running in a curve, the wheel set may get into torsional vibration. It involves the formation of temporary differences of rotational speed and different direction of rotation of wheels of the wheel set in relation to each other, which causes alternate torsion of the wheel set axle. In case of torsional vibration occurrence, the axle of the wheel set operates as a torsion spring and the other elements forming the wheel set, especially the wheels with mounted brake discs, operate as torsional oscillate masses. The effect of rail vehicle wheel set torsional vibration occurrence is torsional load of wheel set axle, which may cause its failure and as a result derailment of rail vehicle.

From the European patent specification no EP1551646B1 is known the solution of equipping the wheel plate with masses attached elastically, adapted for oscillations with resonance frequency of torsional vibration of the wheel/axle system, which damps torsional vibration by anti-phase vibration in relation to vibration of the wheel set.

From the European patent specification no EP2960073A1 is known the solution, in which two different masses attached to the wheel plate were used and adapted for damping of torsional vibration by anti-phase oscillation in relation to torsional vibration of the wheel set. These masses have different frequencies of resonance vibration to ensure vibration damping for variable parameters of the wheel set.

From the European patent specification no EP2960133A1 is known the solution, in which brake discs are in the form of two resonance masses attached to the wheel plate, which damp the torsional vibration.

From the German patent specification no DE10336729A1 is known the solution, in which the brake discs were used as passive mass elements to reduce torsional vibration.

From the patent specification no US4392681 A is known the damper of resonance torsional vibration of the rotating bodies, made in a form of several plates mounted to side surface of the wheel flange of the wheel set, which damp resonance vibration effectively by generation of conjugate vibrations.

The disclosed technical solutions, are based on a principle of mechanical damping of torsional vibration, caused mainly by using masses oscillating in anti-phase. These solutions have many disadvantages, which are in particular: possibility of vibration damping only in determined frequency band of resonance of wheel set, necessity to use huge masses oscillating in anti-phase and necessity of determination of the resonance frequency band to each new construction in order to adjust the parameters of the damper. Moreover, the torsional vibration hydraulic dampers of the rail vehicle wheel set are not known in the state of art.

The object of the invention is to eliminate the disadvantages of solutions known in the state of art of torsional vibration damping of rail vehicles wheel set, more specifically, passenger rail vehicles and traction units.

This object of the invention is solved by torsional vibration hydraulic damper of the rail vehicle wheel set according to the invention. The damper according to the embodiment and compared with solutions known in state of art, prevents the wheel set from formation and damping of torsional vibration regardless of its technical parameters, more specifically, regardless of changeable wheel set vibration resonance frequency due to wheels wear and within full range of rail vehicle running velocity.

The torsional vibration hydraulic dampers of the wheel set according to the invention is characterized in that it contains rotary hydraulic displacement devices with changeable direction of operation, wherein each of these displacement devices comprises a rotor which is mounted to wheel set and housing wherein the housing is mounted to rail vehicle, in particular to axle-box body or bogie frame or rail vehicle framework and rotary hydraulic displacement devices are connected by hydraulic conduits and filled with a hydraulic medium.

Preferably, the adjustable hydraulic throttle is mounted to the hydraulic conduits.

Preferably, rotary hydraulic displacement devices contain suction chambers and pumping chambers connected by throttling orifices formed in active components of rotor, preferably in vanes.

Preferably, rotary hydraulic displacement devices contain suction chambers and pumping chambers connected by throttling gaps located between active components of the rotor, preferably between vanes and housing.

Preferably, rotary hydraulic displacement devices are pumps, preferably vane pumps.

Preferably, rotary hydraulic displacement devices are displacement rotary actuators, preferably vane rotary actuators.

Preferably, the rotor is mounted to the wheel set using intermediate component, preferably assembly disc.

Preferably, hydraulic conduits connect hydraulic outlets of rotary hydraulic displacement devices with their hydraulic inlets.

Preferably, the rotor of rotary hydraulic displacement device contains active components, preferably vanes, which are subtended to the housing using springs.

Preferably, torsional vibration hydraulic damper may be used in rail vehicles, preferably in passenger vehicles or traction units.

According to the invention, for each direction of operation of rotary hydraulic displacement device rotor in relation to housing, change of volume of suction and pumping chambers is the same.

According to the invention, mounting of rotors of rotary hydraulic displacement devices to the wheel set allows rigid transmission of load between the wheel set and the rotor, especially torque load. The rotors may be mounted to the wheel set directly to the front surfaces of its axle, to the cylindrical surface of its trunnion pins, to the wheel plates or to the cylindrical surface of the axle located between the wheels of the wheel set, depending on rail vehicle construction. According to the invention, rigid transmission of the loads is also possible with mounting of the rotor to the wheel set using intermediate component, for example, assembly disc.

According to the invention mounting of the rotary hydraulic displacement device housings to the rail vehicle, in particular to the axle-box housing or bogie frame or rail vehicle framework eliminates occurrence of housings rotation in relation to each other.

According to the invention, the rotary hydraulic displacement devices connected by hydraulic conduits and filled with hydraulic medium forms closed hydraulic circuit.

According to the invention, the rotor vanes are subtended to the housing of rotary hydraulic displacement device using springs in order to provide leakproofness both during static conditions and during wheel set rotation and to allow operation of the torsional vibration hydraulic damper for the velocity of the rail vehicle within full velocity range from 0 kph to maximal constructional velocity.

In one of preferable embodiment of the invention, the hydraulic conduits are connected using adjustable hydraulic throttle, which allows control of the parameters of the torsional vibration damping by adjustment of setting of throttling of hydraulic medium flow.

In another preferable embodiment of the invention, the rotor equipped with throttling orifices is placed between suction chambers and pumping chambers of the rotary hydraulic displacement device, which provides constructional leakage between chambers and hydraulic medium throttle flow inside of the damper.

In another preferable embodiment of the invention, the throttling gaps are present between housing of the rotary hydraulic displacement device and the rotor, which provides constructional leakage between chambers and hydraulic medium throttle flow inside of the damper.

The application also covers the invention of a method of wheel set torsional vibration damping using torsional vibration hydraulic damper which is characterized by simultaneous suction and pumping of the hydraulic medium located inside of rotary hydraulic displacement devices through hydraulic conduits due to rotation of the rotary hydraulic displacement device rotors, which is caused by rotation of the wheel set around its axis while the rail vehicle is running, and also characterized by reaction of the hydraulic medium on the rotary hydraulic displacement device rotors and reduction of relative torsional angle of the wheel set axle by simultaneous suction and pumping of the hydraulic medium inside of hydraulic closed circuit comprising of the rotary hydraulic displacement devices and hydraulic conduits.

The method of hydraulic damping of the wheel set torsional vibration according to the invention allows prevention of occurrence of the torsional vibration and damping of the wheel set torsional vibration due to reduction of relative torsional angle of the wheel set axle as a result of reaction of the hydraulic medium differential pressure in damper hydraulic system, which is generated by wheel set axle torsional vibration. The differential pressure in damper hydraulic system occurs as a result of change of volume of both hydraulic systems, which comprise of pumping and suction chambers of rotary hydraulic displacement device and hydraulic conduits and are separated by rotors of the rotary hydraulic displacement devices. The differential pressure of hydraulic medium, which the damper is filled with, acts directly on active elements of rotary hydraulic displacement device rotors. The throttling flow of the hydraulic medium between two hydraulic systems with different pressure results in dissipation of the wheel set torsional vibration energy.

The use of the torsional vibration hydraulic damper of the wheel set according to the invention allows to gain additional advantages specified below:
- Possibility of torsional vibration damping apart from technical parameters of the wheel set, especially apart from variable wheel set vibration resonance frequency as a result of wheel wear.
- Possibility of adjustment the damping parameters by:
   - modification of the rotor diameter of the rotary hydraulic displacement device;
   - modification of the volume of the hydraulic systems;
   - introducing of the oil throttling flow between damper hydraulic systems;
   - modification of the static pressure in damper hydraulic systems;
   - modification of the hydraulic fluid parameters, especially the viscosity of the fluid.
- Elimination of necessity of determination of frequency band of resonance of wheel set.

Description of drawings:
Fig. 1. presents basic elements of the damper and method of their connection in the form of hydraulic diagram against the wheel set background.
Fig. 2. presents cross-section of the rotary hydraulic displacement device in the form of vane pump, on the plane coincides to wheel set rotation axis.
Fig. 3. presents cross-section of the rotary hydraulic displacement device in the form of vane pump, on the normal plane to wheel set rotation axis.
Fig. 4. presents cross-section of the rotary hydraulic displacement device in the form of vane pump equipped with throttling orifices and throttling gaps and mounted using intermediate component, on the plane coincides to wheel set rotation axis.
Fig. 5. presents cross-section of the rotary hydraulic displacement device in the form of vane pump equipped with throttling orifices and throttling gaps and mounted using intermediate component, on the normal plane to wheel set rotation axis.

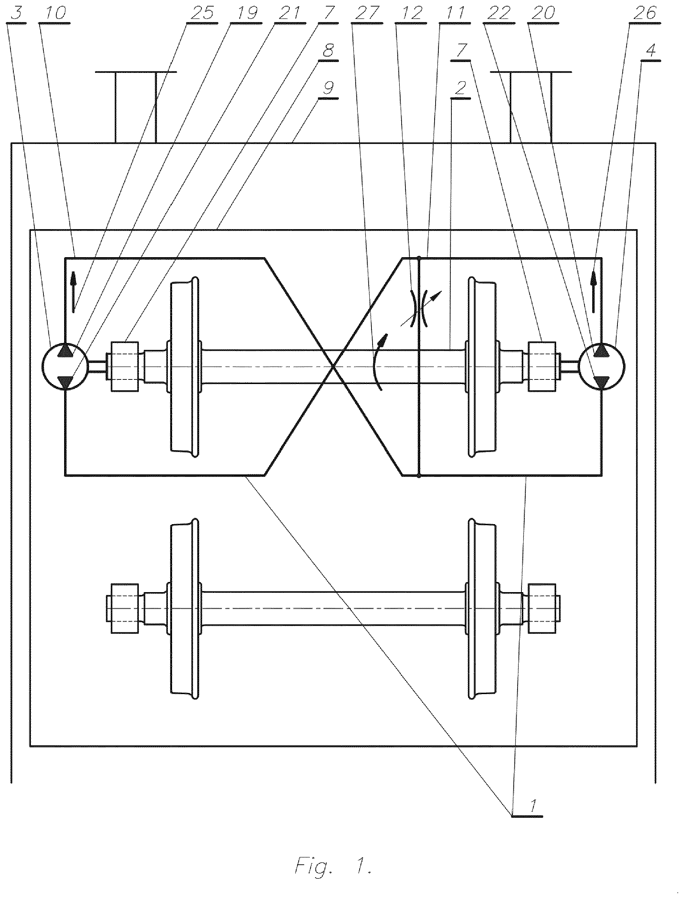

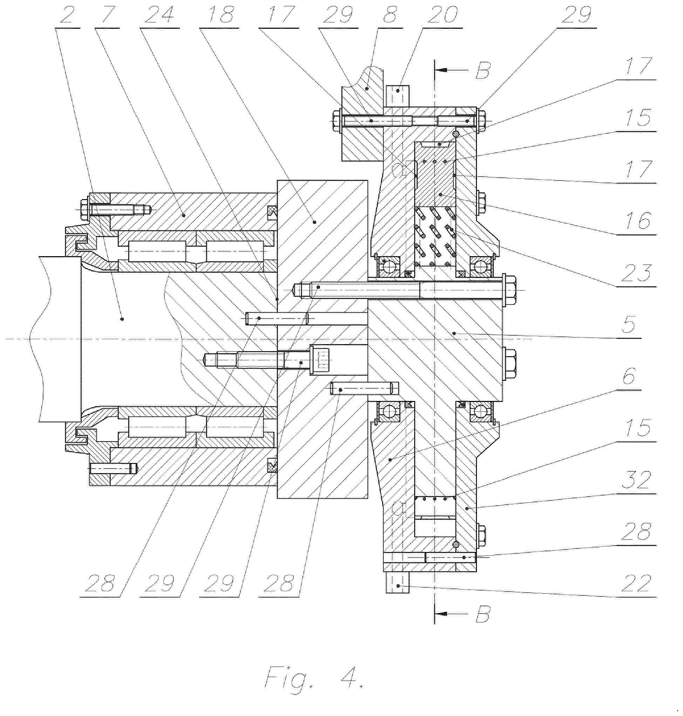

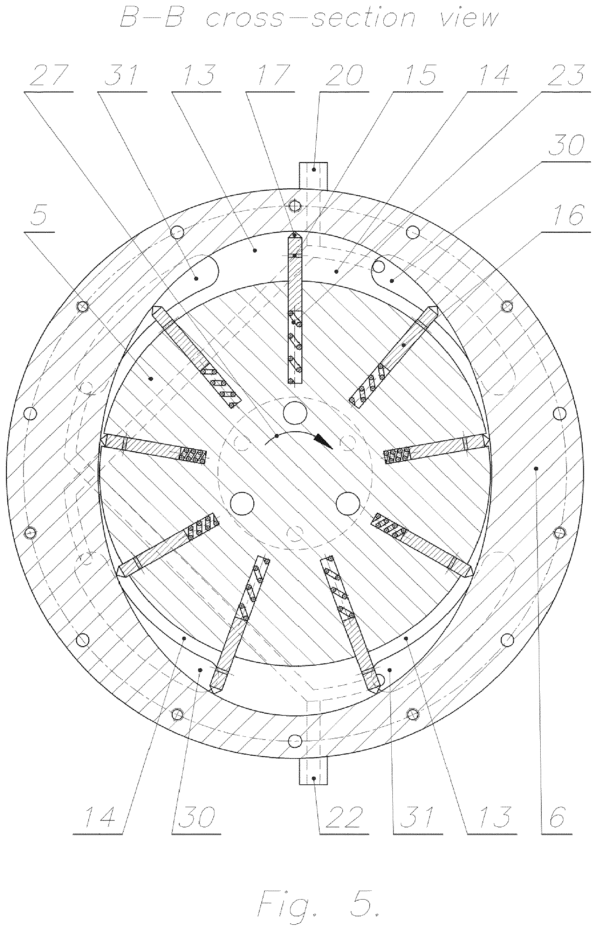

The embodiments of the invention are presented on Fig. 1, Fig. 2, Fig. 3,Fig. 4 and Fig. 5.

According to embodiment presented on Fig. 1, the torsional vibration hydraulic damper 1 comprises two identical rotary hydraulic displacement devices 3 and 4 in the form of vane pumps with fixed delivery and changeable flow direction of hydraulic medium. The rotors 5 of rotary hydraulic displacement devices 3 and 4, according to the embodiment, are mounted to wheel set 2, directly to its front surfaces 24. According to this embodiment, the rotary hydraulic displacement devices 3 and 4 are connected together by hydraulic conduits 10 and 11 in such a way that hydraulic outlet 19 of rotary hydraulic displacement device 3 is connected with hydraulic inlet 22 of rotary hydraulic displacement device 4 using hydraulic conduit 10 and hydraulic outlet 20 of rotary hydraulic displacement device 4 is connected with hydraulic inlet 21 of rotary hydraulic displacement device 3 using hydraulic conduit 11, which forms two hydraulic systems. According to this embodiment, the hydraulic conduits 10 and 11, which connect the pumps, have equal length and equal volume of the hydraulic medium. The housings 6 of the rotary hydraulic displacement devices 3 and 4, according to this embodiment, are mounted to the axle-box body 7 in such a way that provides identical position of the rotor 5 in relation to the housing 6 of both rotary hydraulic displacement devices 3 and 4. In this embodiment the adjustable hydraulic throttle 12 is mounted to the hydraulic conduits 10 and 11. According to this embodiment the hydraulic medium is pumping towards directions marked by arrows 25 and 26 at rotation of the wheel set towards direction marked by arrow 27 at the same time.

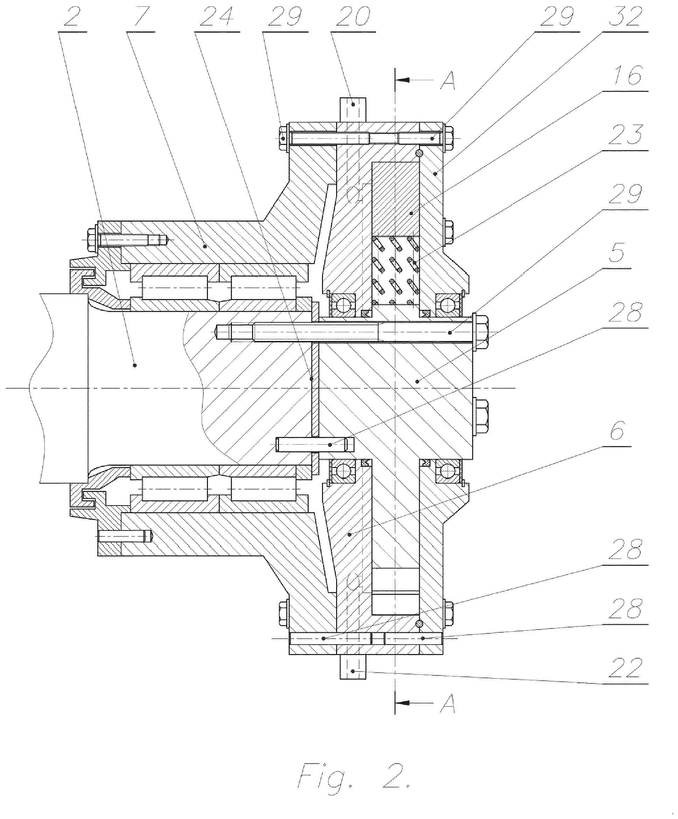

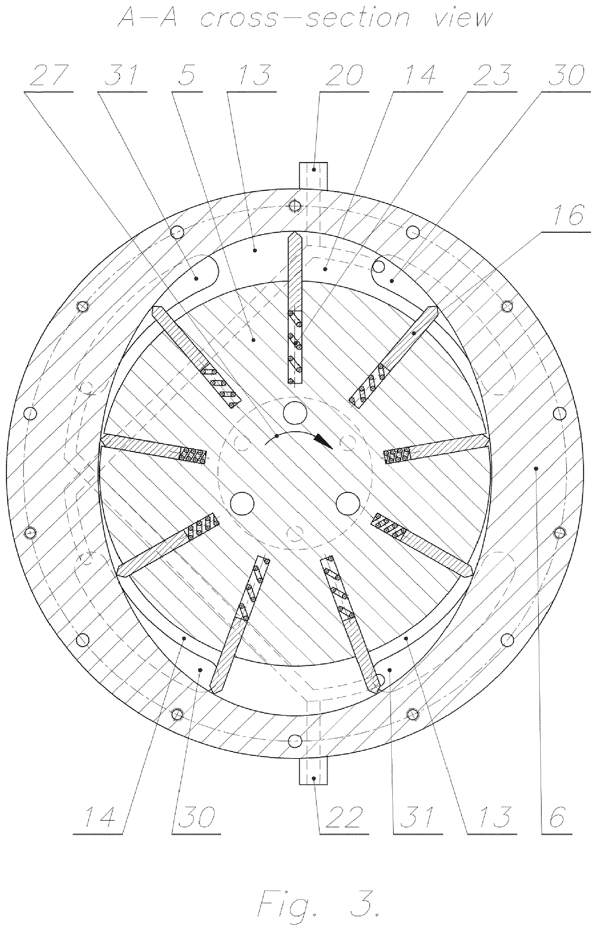

Fig. 2 and Fig. 3 presents the embodiment of the rotary hydraulic displacement device 4 in the form of changeable flow direction vane pump. In this embodiment the rotor 5 of the rotary hydraulic displacement device 4 is mounted to the front surface 24 of the wheel set 2 using pins 28 and bolts 29. In this embodiment the rotary hydraulic displacement device 4 in the form of vane pump comprising two kidney-shaped pumping chambers 30 and two kidney-shaped suction chambers 31. The rotary hydraulic displacement device 4, according to this embodiment, comprising nine vanes 16, which are mounted perpendicular to cylindrical surface of the rotor 5. The vanes 16 in this embodiment are subtended to internal surface of the housing 6 of the rotary hydraulic displacement device 4 using springs 23, to provide leakproofness both during static conditions and during rotation of the wheel set 2. The rotary hydraulic displacement device 4, according to this embodiment, comprising cover 32, which is mounted to the housing 6 using bolts 29 and pins 28. The housing 6, in this embodiment, is mounted to the axle-box body 7 using bolts 29 and pins 28.

Fig. 2 and Fig. 3 present the embodiment of the rotary hydraulic displacement device 4 in the form of changeable flow direction vane pump. In this embodiment the rotor 5 of the rotary hydraulic displacement device 4 is mounted to the front surface 24 of the wheel set 2 by intermediate components 18 using pins 28 and bolts 29. In this embodiment the rotary hydraulic displacement device 4 in the form of vane pump comprises two kidney-shaped pumping chambers 30 and two kidney-shaped suction chambers 31. The rotary hydraulic displacement device 4, according to this embodiment, is equipped with nine vanes 16 which are mounted perpendicular to cylindrical surface of the rotor 5. The vanes 16 in this embodiment comprise throttling orifices 15 and throttling gaps 17. The vanes 16 in this embodiment are subtended to internal surface of the housing 6 of the rotary hydraulic displacement device 4 using springs 23. The rotary hydraulic displacement device 4, according to this embodiment, comprises the cover 32 mounted to housing 6 using bolts 29 and pins 28. The housing 6 in this embodiment is mounted to the bogie frame 8 using bolts 29.

The reference description list:
1 -torsional vibration hydraulic damper
2 - wheel set
3,4 - rotary hydraulic displacement devices
5 - rotor
6 - housing
7 - axle-box body
8 - bogie frame
9 - rail vehicle framework
10, 11- hydraulic conduits
12 -adjustable hydraulic throttle
13 - suction chambers
14 - pumping chambers
15 - throttling orifices
16 - active components of rotor, vanes
17 - throttling gaps
18 - intermediate component
19,20 - hydraulic outlets of rotary hydraulic displacement devices
21,22 - hydraulic inlets of rotary hydraulic displacement devices
23 - springs
24 - front surface
25,26 - arrows indicating the pumping direction of hydraulic medium
27 - arrow indicating the direction of wheel set rotation
28 - pins
29 - bolts
30 - kidney-shaped pumping chambers
31- kidney-shaped suction chambers
32 - cover

## Claims

1. The torsional vibration hydraulic damper (1) of the wheel set (2) **characterized that** it contains rotary hydraulic displacement devices (3,4) with changeable direction of operation, wherein each of rotary hydraulic displacement devices (3,4) comprises a rotor (5) mounted to the wheel set (2) and housing (6), wherein the housing (6) is mounted to rail vehicle, preferably to the axle-box body (7) or bogie frame (8) or rail vehicle framework (9) **and characterized that** the rotary hydraulic displacement devices (3,4) are connected using hydraulic conduits (10,11) and filled with a hydraulic medium.

2. The torsional vibration hydraulic damper (1) according to claim 1 **characterized that** adjustable hydraulic throttle (12) is mounted to hydraulic conduits (10,11).

3. The torsional vibration hydraulic damper (1) according to claim 1 **characterized that** rotary hydraulic displacement devices (3,4) contain suction chambers (13) and pumping chambers (14), connected by throttling orifices (15), formed in active components (16) of the rotor (5), preferably in the vanes.

4. The torsional vibration hydraulic damper (1) according to claim 1 **characterized that** rotary hydraulic displacement devices (3,4) contain suction chambers (13) and pumping chambers (14), connected by throttling gaps (17) located between active components (16) of the rotor (5), preferably vanes, and housing (6).

5. The torsional vibration hydraulic damper (1) according to claims 1, 3 or 4 **characterized that** rotary hydraulic displacement devices (3,4) are pumps, preferably vane pumps.

6. The torsional vibration hydraulic damper (1) according to claims 1, 3 or 4 **characterized that** rotary hydraulic displacement devices (3,4) are the displacement rotary actuators, preferably vane rotary actuator.

7. The torsional vibration hydraulic damper (1) according to claim 1 **characterized that** the rotor (5) is mounted to the wheel set (2) using intermediate component (18), preferably assembly disc.

8. The torsional vibration hydraulic damper (1) according to claim 1 **characterized that** hydraulic conduits (10,11) connects hydraulic outlets (19,20) of rotary hydraulic displacement devices (3,4) with their hydraulic inlets (21,22).

9. The torsional vibration hydraulic damper (1) according to claim 1 **characterized that** the rotor (5) of the rotary hydraulic displacement devices contains active components (16), preferably vanes, which are subtended to the housing (6) using springs (23).

10. The torsional vibration hydraulic damper (1) according to any of the preceding claims **characterized that** it may be used in rail vehicles, preferably in passenger rail vehicles or traction units.

11. The method of the torsional vibration damping of the wheel set (2) using torsional vibration hydraulic damper (1) according to any of the preceding claims **characterized that:**
a. Rotation of the wheel set (2) around its axis, which occurs while the rail vehicle is running, causes rotation of the rotors (5) of the rotary hydraulic displacement devices (3,4) and simultaneous suction and pumping the hydraulic medium, which is inside of the rotary hydraulic displacement devices (3,4), through hydraulic conduits (10,11);
b. simultaneous suction and pumping of the hydraulic medium in hydraulic closed circuit of the rotary hydraulic displacement devices (3,4) and the hydraulic conduits (10,11) causes reaction of the hydraulic medium on the rotors (5) of the rotary hydraulic displacement devices (3,4) and reduction of the relative torsional angle of the axle of the wheel set (2).
